# EUROPEAN PATENT SPECIFICATION

(11) **EP 3 677 487 B1**
(45) Date of publication and mention of the grant of the patent: **17.11.2021**
(21) Application number: 19000598.3
(22) Date of filing: 31.12.2019
(51) Int. Cl.: B62B 1/12, B62B 5/00

(54) **APPARATUS FOR TRANSPORTING OBJECTS BY MEANS OF A PUSH-ASSISTED TROLLEY**
VORRICHTUNG ZUM TRANSPORT VON GEGENSTÄNDEN MITHILFE EINES SCHUBUNTERSTÜTZTEN WAGENS
APPAREIL POUR LE TRANSPORT D'OBJETS AU MOYEN D'UN CHARIOT À POUSSÉE ASSISTÉE

(30) Priority: 31.12.2018 IT 201800021454
(43) Date of publication of application: 08.07.2020
(73) Proprietor: Sbardella, Euro, 52044 Cortona (AR) (IT); Cecchini, Stefano, 06125 Perugia (PG) (IT); Cristallini, Angelo, 06129 Perugia (PG) (IT)
(72) Inventor: Sbardella, Euro, I-52044 Cortona (AR) (IT)
(74) Representative: Aprà, Mario

(56) References cited:
- CN-Y- 2 191 013
- DE-U1-202004 015 048
- US-A1- 2004 265 148
- US-A1- 2012 160 577
- US-B1- 9 796 402

## Description

The present invention concerns an apparatus for transporting objects by means of a push-assisted trolley.

There is known a trolley with two wheels for transporting objects, comprising at least one wheel driven in rotation by means of an electric gear motor, supplied by means of the electric battery means on board the trolley. This trolley is designated herein as push-assisted trolley.

However, said known push-assisted trolley has a limited autonomy of movement, depending on the capacity of the electric battery means on board the trolley, which must necessarily be maintained within dimensional limits and be of moderate weight. When the charge of said electric battery means is used up, regardless of where the trolley is located, It can no longer be used as push-assisted trolley and must be taken to a station that is equipped to replace or to charge the electric battery means.

Moreover, said known push-assisted trolley has no means for controlling the push imparted by the gear motor, in particular In relation to the characteristics of the ground on which the trolley Is moved.

US 2012/160577 A1 discloses an apparatus for transporting objects by means of a push-assisted trolley having the features described in the preamble of claim 1.

An object of the present invention is to provide an apparatus for transporting objects by means of a push-assisted trolley of the type specified, which allows the operating autonomy of movement of the trolley to be easily increased.

Another object of the present Invention is to provide an apparatus for transporting objects by means of a push-assisted trolley, which allows control of the push imparted by the gear motor, In particular in relation to the conditions of the ground on which the trolley moves.

A further object of the present Invention is to provide an apparatus for transporting objects by means of a push-assisted trolley, which has a simple structure, safe and reliable operation and Is simple to maintain.

In view of these objects, the present invention provides an apparatus for transporting objects by means of a push-assisted trolley, the essential feature of which forms the subject matter of the characterizing part of claim 1.

Further advantageous features of the invention are described in the dependent claims.

Features and advantages of the invention will be more apparent from the following detailed description of two examples of embodiment, with reference to the drawing, which shows important details for the invention, and from the claims.

The features illustrated herein should not necessarily be understood to be in scale and they are represented so that the peculiarities according to the invention are clearly highlighted.

In the drawing:
- Fig. 1 is a perspective front and three-quarter view from above of a first example of embodiment of the apparatus for transporting objects by means of a push-assisted trolley, comprising two units represented separated from each other;
- Figs. 2 to 5 are views of the apparatus of Fig. 1 in a different scale and wherein said two units are illustrated mutually connected, wherein Fig. 2 is a front elevation view, Fig. 4 Is a perspective view similar to that of Fig. 1 and Figs. 3 and 5 are side elevation views, respectively from the right and from the left with respect to Fig. 2;
- Fig. 6 is a view similar to that of Fig. 4 but In a rear perspective view from below;
- Fig. 7 is a detailed view, in a larger scale, of the detail VII of Fig. 6;
- Fig. 8 is a detailed view and in a larger scale of the detail VIII of Fig. 5;
- Fig. 9 is a view similar to that of Fig. 6, but wherein the two units of the apparatus are illustrated separated;
- Fig. 10 is a detailed view, In a larger scale, of the detail X of Fig. 9;
- Fig. 11 is a view similar to that of Fig. 1, but illustrating a second simplified embodiment of the apparatus according to the present invention, comprising two units represented separated from each other;
- Figs. 12 to 15 are views of the apparatus of Fig. 11 in a different scale and wherein said two units are illustrated mutually connected, wherein Fig. 12 is a front elevation view, Fig. 14 is a perspective view similar to that of Fig. 11 and Figs. 13 and 15 are side elevation views, respectively from the right and from the left with respect to Fig. 12.

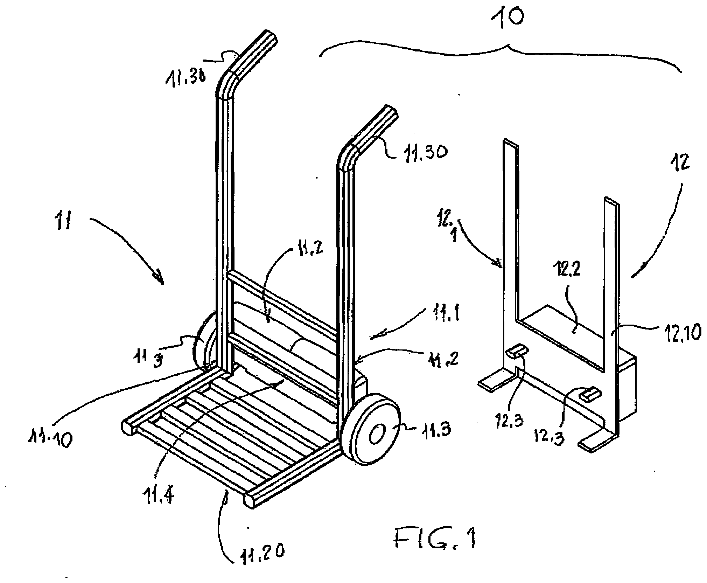

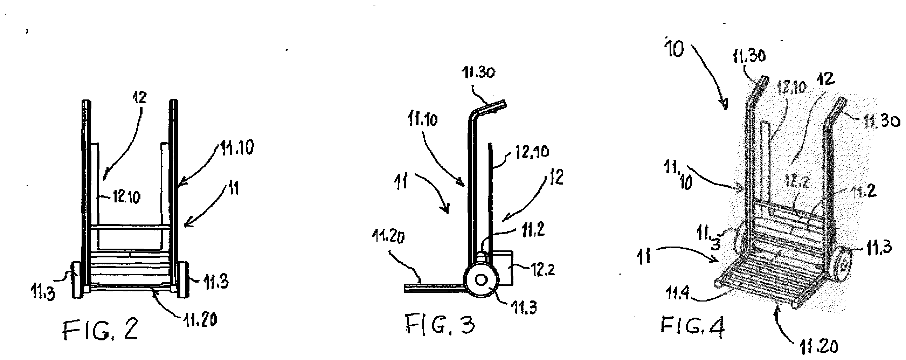

First example of embodiment (Figs. 1 to 10), not covered by the claims.

With reference to the drawing, the reference numeral 10 (Fig. 1) indicates as a whole the apparatus for transporting objects by means of a push-assisted trolley, according to a first example of embodiment.

Said apparatus 10 essentially comprises:
- a first unit 11 configured as a trolley 11.1 with two wheels for transporting objects, comprising electric gear motor means 11.2 (known per se and not illustrated), configured to control the rotation of two wheels 11.3, coaxial with respect to a horizontal axis, and first rechargeable electric storage battery means 11.4 (known per se and not illustrated), configured to supply, through a corresponding electric control circuit (known per se and not illustrated), said electric gear motor means 11.2 (it can be noted that In relation to said electric gear motor means and to said electric battery means, well known per se, only the respective protective casings are shown), and
- a second unit 12 configured as a body 12.1, structurally complementary with respect to said trolley 11.1. and comprising electric/electronic battery charger means 12.2 to electrically charge said first electric battery means 11.4 of said first unit 11 (it can be noted that in relation to said electric/electronic battery charger means, well known per se, only the respective protective casing is illustrated).

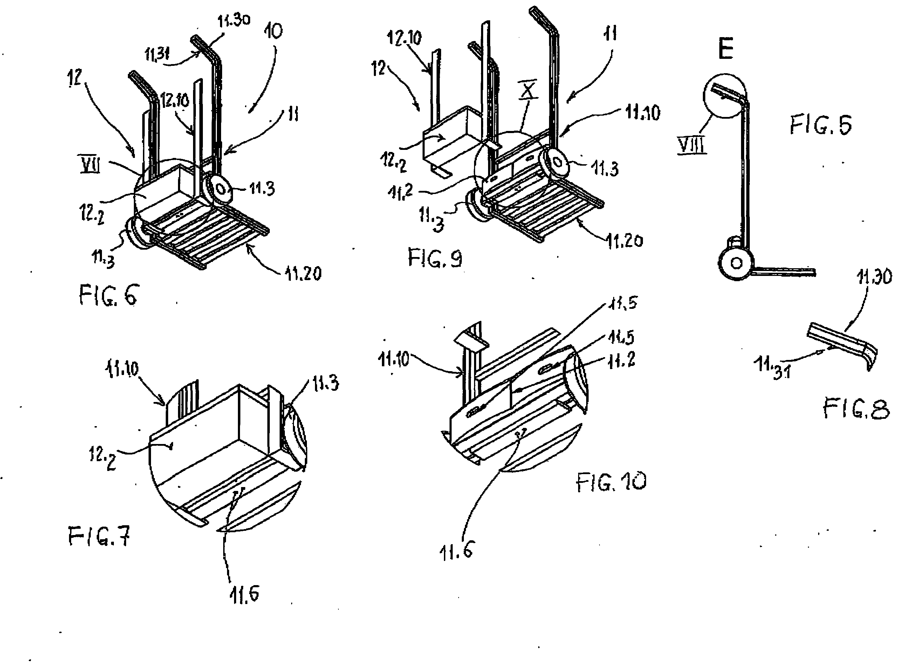

Moreover, said first electric battery means 11.4 of said first unit 11 and said electric/electronic battery charger means 12.2 of said second unit 12 comprise respective removable electrical connection electric means, respectively 11.5 and 12.3 (Figs. 10, 1), configured to selectively produce mutual electrical connection and to electrically charge said first electric battery means 11.4 by means of said electric/electronic battery charger means 12.2.

It can be noted that, in the example Illustrated, said removable electrical connection electric means, 11.5 and 12.3, are configured as electrical plugs and related electrical outlets, which are mutually removably couplable and are electrically connected in corresponding electric control circuits provided in said first unit 11 and in said second unit 12, respectively. In particular, said removable electrical connection electric means, 11.5 and 12.3, are electrically connected in the respective first and second unit, 11, 12, with respect to electric circuit means that produce the electrical connection with said electric battery means 11.4 and said electric/electronic battery charger means 12.2, respectively.

In particular, In the example illustrated, said electric gear motor means 11.2 comprise two gear motors independent from each other: each provided for controlling the operation of a corresponding wheel 11.3 of the trolley 11.1. Said electric battery means 11.4 comprise at least one electric battery pack for said two gear motors. Moreover, said electric battery charger means 12.2 comprise a battery charger device for said at least one electric battery pack. Correspondingly, said removable electrical connection electric means, 11.5, 12.3, comprise electrical connector means by polarity, configured to produce a removable electrical connection between said at least one electric battery pack and said at least one battery charger device. According to the example illustrated, said trolley 11.1 of said first unit 11 comprises a three-dimensional frame 11.10 including two substantially L-shaped lateral uprights with mirror Image symmetry with respect to a vertical median plane and a plurality of cross members connecting said two uprights, wherein said three-dimensional frame 11.10 has a front platform 11.20, configured for loading packages and delimited by the lower branches of said L-shaped lateral uprights, while a pair of handles 11.30 is provided at the free ends of the upper branches of said L-shaped uprights.

Said two wheels 11.3 are supported by means of said three-dimensional frame 11.10, are aligned according to a common transverse axis behind and above with respect to said front platform 11.20 of said frame 11.10 and are driven in rotation by means of said electric gear motor means 11.2, wherein a respective gear motor is provided for each wheel 11.3.

Said first unit 11 further comprises:
- electronic position sensor means (known per se and not illustrated) connected in said electric control circuit, configured to control the power supply of said respective electric gear motor means 11.2. Lever manual control means 11.31 (Fig. 8) are arranged at one of said handles 11.30 and are configured as accelerator lever to control the operation of said position sensor means at least in the starting phase of said respective electric gear motor means 11.2;
- microcontroller electronic means (known per se and not Illustrated), configured for functional control of each of said two electric gear motors and electrically connected with respect to said electrical control circuit.

It can be noted that said position sensor means, which in a particular embodiment can be configured, for example, as a potentiometer and said lever manual control means 11.31 are advantageously integrated in a handle 11.30 of the trolley 11.1 to satisfy the requirements of electrical protection from environmental humidity.

It can be noted, moreover, that said second unit 12, which Is produced as a body 12.1, includes a frame 12.10 of a shape partially couplable at the rear with respect to said frame 11.10 of said first unit 11. In particular, said frame 12.10 comprises two substantially L-shaped lateral flat uprights symmetrical with respect to said vertical median plane of said first unit 11 and a wide connection plate cross member of said two L-shaped uprights. A box-shaped body is fixed with respect to the rear face of said cross member and contains said electric/electronic battery charger means 12.2, while said connection plugs 12.3 protrude from the front face of said connection cross member. Said second unit 12 is configured to partially accommodate said first unit 11, in the fashion of a cradle, when the electrical plugs 12.3 of the second unit 12 are correctly inserted Into the corresponding electrical outlets 11.5 of the first unit 11.

It can also be noted that said second unit 12 can, for example, be arranged as fixed unit inside the charging compartment of a van for transporting packages. In this case, for example, said electric/electronic battery charger means 12.2 are electrically connected, when necessary, to charge said first battery means 11.4, by means of flexible electric cable connection means provided with a male electrical plug, with respect to electrical power supply means present In said vehicle, for example with respect to the female electrical outlet of the cigarette lighter provided in the van.

Moreover, said first unit 11 comprises electronic safety control means including gyroscope/accelerometer means (known per se and not illustrated) and ultrasonic sensor means 11.6 (Figs. 7, 10), which are connected in said electrical control circuit with respect to said microcontroller electronic means and are configured to detect data relating to the positioning with respect to the ground and to the acceleration of said trolley 11.1 and to the conformation of the ground on which said trolley 11.1 is moved, and to determine interruption of the power supply of said electric gear motor means 11.2, when the data detected by said safety control means do not conform to given safety parameters pre-recorded In electronic memory means operatively connected with respect to said microcontroller electronic means.

It can be noted that said ultrasonic sensor means 11.6 are arranged in said frame 11.10 close to the ground, between said wheels 11.3.

Specifically, said microcontroller electronic means are configured to receive and process the data detected by means of said gyroscope/accelerometer means and said ultrasonic sensor means 11.6 and send corresponding signals to electronic controller means that actuate said electric gear motor means 11.2.

It can be noted, in particular, that each of said two wheels 11.3, operated by a respective electric gear motor, is actuated with the intermediation of a respective electronic controller. The controllers of said wheels 11.3 receive respective signals modulated by said microcontroller electronic means, wherein the modulation takes place consistently with the position of said accelerator lever 11.31, positioned at a handle 11.30 of the trolley 11.10. The aforesaid safety arrangement Is particularly advantageous during uphill/downhill travel, wherein the gyroscope could make distorted readings, in particular with reference to the inclination of said first unit 11 with respect to the ground, as by default the position would be inclined in relation to the earth's axis. In these situations, said ultrasonic sensor means 11.6 detect and transmit to said microcontroller electronic means signals signifying the true distance of said frame 11.10 (or of a predetermined part of said frame) with respect to the ground below.

Said microcontroller electronic means process said information, optionally in combination with the information detected and transmitted by said gyroscope/accelerometer means, by means of a program code pre-recorded in said electronic memory means connected with respect to said microcontroller electronic means.

Second example of embodiment of the invention (Figs, 11 to 15) according to claim 1-7.

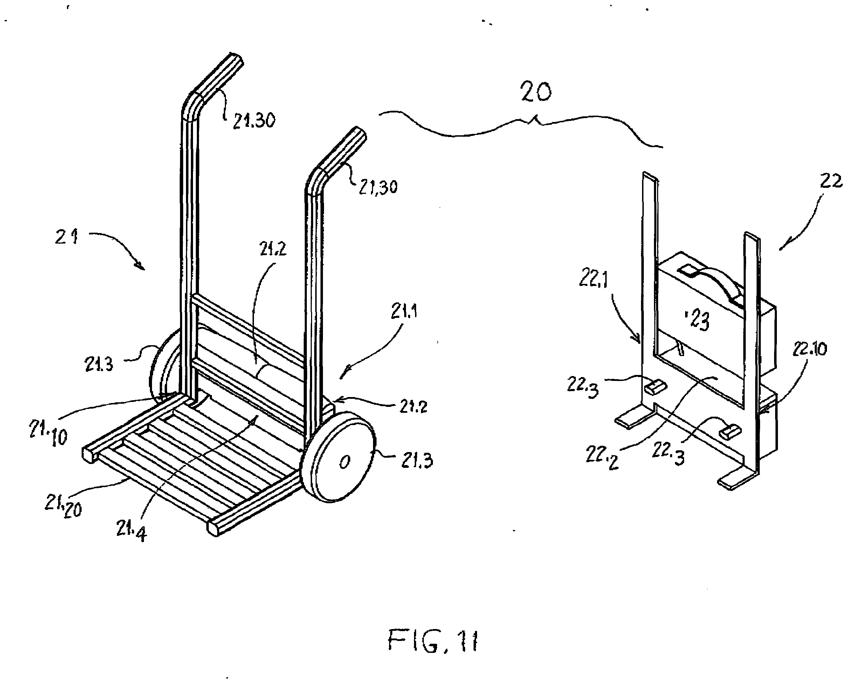

In Fig. 11 the reference numeral 20 indicates as a whole the apparatus according to a second example of embodiment of the invention.

Said apparatus 20 comprises two units, namely: a first unit 21 configured as a trolley 21.1 with two wheels 21.3 for transporting objects and a second unit 22 configured as a body 22.1, structurally complementary with respect to said trolley 21.1, as will be more apparent hereunder.

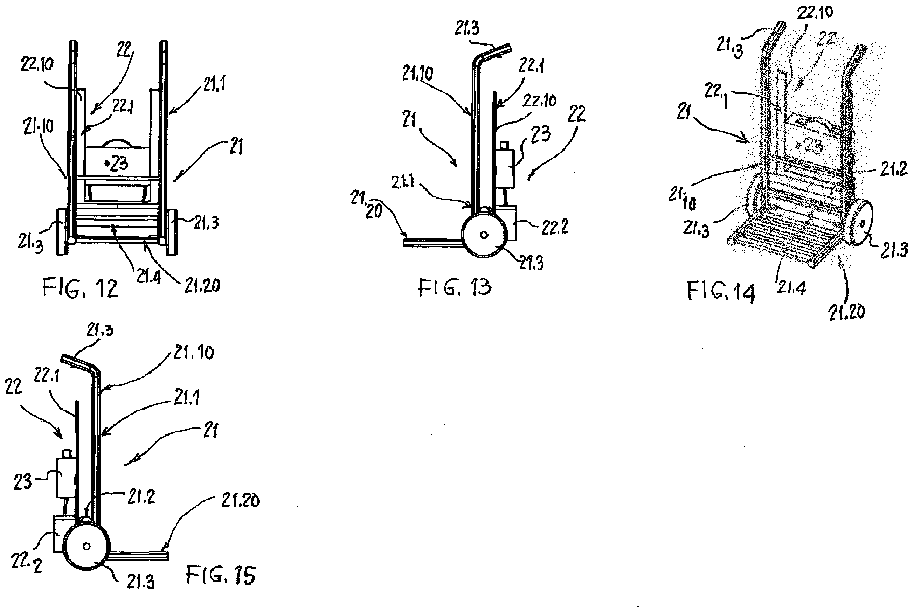

It can be noted that said first unit 21 is entirely similar, structurally and functionally, to the first unit 11 of the apparatus 10, according to the first embodiment described above, and that In Figs. 11 to 15 the parts of said first unit 21, corresponding to those of said first unit 11, are indicated with reference numerals corresponding to those of the first unit 11 In Figs. 1 to 10, but increased by ten. Therefore, said first unit 21 of the apparatus 20 shall not be further described.

The second unit 22 of said apparatus 20 comprises, similarly to the second unit 12 of the apparatus 10 described above, electric/electronic battery charger means 22.2, to electrically charge first electric battery means 21.4 of said first unit 21 (It can be noted that in relation to said electric/electronic battery charger means and to said electric battery means, well known per se, only the respective protective casing is illustrated in the drawing).

In particular, said second unit 22 Is produced as a body 22.1, which includes a frame 22.10 of a shape partially couplable at the rear with respect to a frame 21.10 of said first unit 21, similarly to what was described previously with reference to the body 12.1 of the second unit 12 of the apparatus 10.

Moreover, similarly to what was described with reference to the first embodiment of the invention, said first electric battery means 21.4 of said first unit 21 and said electric/electronic battery charger means 22.2 of said second unit 22 of the apparatus 20 comprise respective removable electrical connection electric means (only the electrical connection means 22.3 of said second unit 22 are illustrated In Fig. 11). In particular, said electrical connection means 22.3 are configured as electrical connection plugs branched with respect to electric circuit means of said second unit 22 (known per se and not illustrated) that produce the electrical connection with said electric/electronic battery charger means 22.2.

According to the present second embodiment of the invention, said second unit 22 further comprises second rechargeable electric storage battery means 23, supported by means of said frame 22.10. Said second rechargeable electric storage battery means 23 are electrically connected, by means of corresponding electric circuit means, on the one side, with respect to said electric/electronic battery charger means 22.2, for electric charging, when necessary, and on the other side, with respect to said electrical connection means 22.3 configured as electrical plugs. In particular, said second rechargeable electric storage battery means 23 comprise two electric battery packs independent from each other. Moreover, in said first unit 21, said first electric battery means 21.4 are electrically connected, by means of corresponding electric circuit means, with respect to removable connection means configured as electrical outlets, complementary, in structure, arrangement and function, with respect to said connection plugs 22.3 of the second unit 22.

In particular, it can be noted that said first electric battery means 21.4 of the first unit 21 comprise two electric battery packs independent from each other that, as explained with reference to the first embodiment described above, supply electricity to respective electric gear motors of electric gear motor means 21.2 of said first unit 21 (it must be noted that the reference numeral 21.2 indicates the casing of said gear motor means, well known per se).

Correspondingly, the supply and control electric circuit of said first unit 21 comprises two distinct electrical outlets complementary, by structure, arrangement and function, with respect to said two connection plugs 22.3 of the second unit 22.

In particular, the supply and control electric circuit of the first unit 21 and the supply and control electric circuit of the second unit 22 are configured to produce, when said electrical connection plugs 22.3 of the second unit 22 are electrically connected with respect to said electrical connection outlets of the first unit 21, selectively by means of electrical switching means (known per se and not illustrated), two different configurations of electrical connection, namely:
- a first electric circuit configuration, wherein said first electric battery means 21.4 of said first unit 21 are electrically connected with respect to said electric/electronic battery charger means 22.2, for electric charging, and
- a second electric circuit configuration, wherein each electric battery pack of said second rechargeable electric storage battery means 23 is electrically connected with a respective of said two electric gear motors of said electric gear motor means 21.2 of the first unit 21.

By means of this arrangement, when the electrical charge of said first electric battery means 21.4 of said first unit 21 is exhausted and an electrical mains power outlet is not available to electrically connect the electric/electronic battery charger means 22.2 of said second unit 22, a user of the apparatus 20 produces the aforesaid second electric circuit configuration between the first unit 21 and the second unit 22 of the apparatus 20, so as to guarantee the electrical power supply of said electric gear motor means 21.2 by means of said second electric battery means 23. Advantageously, said trolley 21.1 of said first unit 21 and said body 22.1 of said second unit 22 comprise removable mutual mechanical connection means, which stably retain said body 22.1 in an arrangement coupled at the rear with respect to said trolley 21.1, when said electrical connection plugs 22.3 of the second unit 22 are electrically connected with respect to said electrical connection outlets of the first unit 21. In this way, said apparatus 20 is movable with respect to the ground complete with said two units 21, 22 connected to each other.

As can be seen from the above, with the apparatus according to the invention it is possible, for example, to return the trolley unit connecting It to the body unit, installed inside the charging compartment of a vehicle, and to use the electrical charging means provided on the vehicle, for example the 12 V cigarette lighter power outlet, to charge battery means. Moreover, according to a useful expedient, the operating autonomy of movement of the trolley unit can be deliberately limited, by limiting the electrical charge of the battery means, to encourage the operator to return the unit, securing it to the body unit and connecting it to the charging means Inside the vehicle. This ensures the operating autonomy of the trolley unit for subsequent deliveries and the active safety of the apparatus. If the apparatus according to the invention is used, for example, in warehouses with sloping surfaces, or in other applications that require more operating autonomy, a specific charging station can be provided on the ground, connected to an electricity network. In this case, the presence of the second electric battery means can ensure long lasting operation of the trolley unit.

Therefore, as can be seen from the above, with the present invention It is possible to achieve the objects indicated in the introduction with simple and effective means.

In particular, the present invention provides an apparatus for transporting objects by means of a push-assisted trolley, which allows the operating autonomy of movement of the trolley to be easily increased.

Further, the present invention provides an apparatus for transporting objects by means of a push-assisted trolley, which allows the push imparted by the gear motor, in particular in relation to the conditions of the ground on which the trolley moves, to be controlled.

Moreover, the present invention provides an apparatus for transporting objects by means of a push-assisted trolley, which has a simple structure, safe and reliable operation and is simple to maintain.

## Claims

1. Apparatus (10, 20) for transporting objects by means of a push-assisted trolley (11.1, 21.1), comprising:
- a first unit (11, 21), configured as a trolley (11.1, 21.1) with two wheels (11.3, 21.3) for transporting objects, comprising electric gear motor means (11.2, 21.2), configured to control the rotation of at least one wheel of said two wheels (11.3, 21.3), and first rechargeable electric storage battery means (11.4, 21.4), configured to supply, through corresponding supply and control electric circuit means, said electric gear motor means (11.2, 21.2), and
- a second unit (12, 22), configured as body (12.1, 22.1), structurally complementary with respect to said trolley (11.1, 21.1) and comprising at least electric/electronic battery charger means (12.2, 22.2), configured to electrically charge said first electric battery means (11.4, 21.4) of said first unit (11, 21);
and wherein said first electric battery means (11.4, 21.4) of said first unit (11, 21) and said electric/electronic battery charger means (12.2, 22.2) of said second unit (12, 22) comprise respective removable electrical connection electric means (11.5; 12.3, 22.3), configured to selectively produce mutual electrical connection and to electrically charge said first electric battery means (11.4, 21.4) by means of electric/electronic battery charger means (12.2, 22.2), through corresponding supply and control electric circuit means of said first unit (11, 21) and of said second unit (12, 22),
**characterized in that** said second unit (22) further comprises second electric storage battery means (23), rechargeable and electrically connected, by means of corresponding electric circuit means, on one side, with respect to said electric/electronic battery charger means (22.2), for electric charging, when necessary, and on the other side, with respect to said removable electrical connection means (22.3) of said second unit (12, 22),
and **in that** said first unit (21) comprises supply and control electric circuit means and said second unit (22) comprises supply and control electric circuit means configured, respectively, to produce, when said removable electrical connection means (22.3) of the second unit (22) are electrically connected with respect to the removable electrical connection means of the first unit (21), by means of electrical switching means, selectively one of two different electrical connection configurations, namely:
- a first electric circuit configuration, wherein said first electric battery means (21.4) of said first unit (21) are electrically connected with respect to said electric/electronic battery charger means (22.2), for electric charging, and
- a second electric circuit configuration, wherein said second electric storage battery means (23) are electrically connected with said electric gear motor means (21.2) of said first unit (21).

2. Apparatus (10) for transporting objects by means of a push-assisted trolley (11.1) according to claim 1, **characterized in that** said first unit (11) comprises:
- electric/electronic position sensor means, connected with respect to said supply and control electric circuit means, configured to control the power supply of said electric gear motor means (11.2), and lever manual control means (11.31), arranged at a handle (11.30) of said trolley (11.1) and configured to control the operation of said potentiometer means at least in the starting phase of said electric gear motor means (11.2), and
- microcontroller electronic means, electrically connected with respect to said supply and control electric circuit means and configured for functional control of said electric gear motor means (11.2).

3. Apparatus (10) for transporting objects by means of a push-assisted trolley (11.1) according to claim 2, **characterized in that** said first unit (11) comprises safety control means, including gyroscope/accelerometer means and ultrasonic sensor means (11.6), connected with respect to said supply and control electric circuit means and configured to detect the data relating to the positioning with respect to the ground and to the acceleration of said trolley (11.1) and to the conformation of the ground on which said trolley (11.1) is moved, and to determine interruption of the power supply of said electric gear motor means (11.2), when the data detected by said safety control means do not conform to given safety parameters pre-recorded in electronic memory means operatively connected with respect to said microprocessor electronic means.

4. Apparatus (10) for transporting objects by means of a push-assisted trolley (11.1) according to one or more of the preceding claims, **characterized In that** said electric gear motor means (11.2) comprise two gear motors independent from each other, each provided for controlling the operation of a corresponding wheel (11.3) of the trolley (11.1); said electric battery means (11.4) comprise at least one electric battery pack for said two gear motors; said electric battery charger means (12.2) comprise at least one battery charger device for said at least one electric battery pack, and said removable electrical connection electric means (11.5, 12.3), comprise electrical connector means by polarity, configured to produce a removable electrical connection between said at least one electric battery pack and said at least one battery charger device.

5. Apparatus (10) for transporting objects by means of a push-assisted trolley (11.1) according to claims 2, 3 and 4, **characterized in that** each of said two wheels (11.3) of said trolley (11.1), operated by a respective gear motor of said electric gear motor means (11.2), Is actuated with the aid of a respective electronic controller, and **in that** the electronic controllers of said two wheels (11.3) receive respective modulated signals from said microprocessor electronic means, wherein said microprocessor electronic means are configured to implement modulation corresponding to the position of oscillation of the lever of said lever manual control means (11.31).

6. Use of the apparatus (10) for transporting objects by means of a push-assisted trolley (11.1) according to one or more of the preceding claims, **characterized in that** said second unit (12) is arranged as fixed unit Inside the charging compartment of a vehicle for transporting objects, and said electric/electronic battery charger means (12.2) are electrically connected, when necessary to charge said first electric battery means (11.4), with respect to electrical power supply means present in said vehicle.

7. Use of the apparatus (20) for transporting objects by means of a push-assisted trolley (21.1) according to one or more of claims 1 to 5, **characterized in that** said trolley (21.1) of said first unit (21) and said body (22.1) of said second unit (22) comprise removable mutual mechanical connection means, which stably retain said body (22.1) connected with respect to said trolley (21.1), when said electrical connection means (22.3) of the second unit (22) are electrically connected with respect to said electrical connection means of said first unit (21).

## Patentansprüche

1. Vorrichtung (10, 20) für den Transport von Gegenständen mittels eines Wagens (11.1, 21.1) mit unterstützter Schubkraft, umfassend:
- eine erste Einheit (11, 21), konfiguriert als Wagen (11.1, 21.1) mit zwei Rädern (11.3, 21.3) für den Transport von Gegenständen, umfassend elektrische Getriebemotormittel (11.2, 21.2), die so konfiguriert sind, dass sie mindestens ein Rad der besagten zwei Räder (11.3, 21.3) in Rotation versetzen, und erste elektrische Mittel mit wiederaufladbarer Akkumulatorenbatterie (11.4, 21.4), die so konfiguriert sind, dass sie über entsprechende Stromkreisversorgungs- und Kontrollmittel die besagten elektrischen Getriebemotormittel (11.2, 21.2) versorgen können, und
- eine zweite Einheit (12, 22), konfiguriert als Fahrgestell (12.1, 22.1), strukturell komplementär zu dem besagten Wagen (11.1, 21.1) und umfassend mindestens elektrische/elektronische Batterieladegerätmittel (12.2, 22.2), die für das elektrische Wiederaufladen der besagten ersten elektrischen Batteriemittel (11.4, 21.4) der besagten ersten Einheit (11, 21) konfiguriert sind;
und wobei die besagten ersten elektrischen Batteriemittel (11.4, 21.4) der besagten ersten Einheit (11, 21) und die besagten elektrischen/elektronischen Batterieladegerätmittel (12.2, 22.2) der besagten zweiten Einheit (12, 22) diesbezügliche auseinandernehmbare elektrische Verbindungsmittel (11.5; 12.3, 22.3) umfassen, die so konfiguriert sind, dass sie selektiv die gegenseitige elektrische Verbindung herstellen und das elektrische Wiederaufladen der besagten ersten elektrischen Batteriemittel (11.4, 21.4) mithilfe der elektrischen/elektronischen Batterieladegerätmittel (12.2, 22.2) durch entsprechende elektrische Stromkreisversorgungs- und Kontrollmittel der besagten ersten Einheit (11, 21) und der besagten zweiten Einheit (12, 22) ausführen,
**dadurch gekennzeichnet, dass** die besagte zweite Einheit (22) außerdem zweite elektrische Mittel mit Akkumulatorenbatterie umfasst, wiederaufladbar und elektrisch verbunden (23) mittels entsprechender Stromkreismittel, einerseits In Bezug auf die besagten elektrischen/elektronischen Batterieladegerätmittel (22.2) zum elektrischen Wiederaufladen, falls erforderlich, und andererseits in Bezug auf die besagten auselnandernehmbaren elektrischen Verbindungsmittel (22.3) der besagten zweiten Einheit (12, 22),
und dadurch, dass die besagte erste Einheit (21) elektrische Stromkrelsversorgungs- und Kontrollmittel umfasst und die besagte zweite Einheit (22) elektrische Stromkreisversorgungs- und Kontrollmittel umfasst, die jeweils so konfiguriert sind, dass sie, wenn die besagten auseinandernehmbaren elektrischen Verbindungsmittel (22.3) der zweiten Einheit (22) elektrisch In Bezug auf die auseinandernehmbaren elektrischen Verbindungsmittel der ersten Einheit (21) verbunden sind, mittels elektrischer Umschaltmittel wahlweise eine von zwei verschiedenen elektrischen Verbindungskonfigurationen realisieren, nämlich:
- eine erste Stromkreiskonfiguration, bei der die besagten ersten Batteriemittel (21.4) der besagten ersten Einheit (21) in Bezug auf die besagten elektrischen/elektronischen Batterieladegerätmittel (22.2) zum elektrischen Wiederaufladen elektrisch verbunden sind, und
- eine zweite Stromkreiskonfiguration, bei der die besagten zweiten Mittel mit Akkumulatorenbatterie (23) elektrisch mit den besagten elektrischen Getriebemotormitteln (21.2) der besagten ersten Einheit (21) verbunden sind.

2. Vorrichtung (10) für den Transport von Gegenständen mittels eines Wagens (11.1) mit unterstützter Schubkraft gemäß Anspruch 1, **dadurch gekennzeichnet, dass** die besagte erste Einheit (11) Folgendes umfasst:
- elektrische/elektronische Positionssensormittel, die in Bezug auf die besagten Stromkreisversorgungs- und Kontrollmittel, die für die Kontrolle der Versorgung der besagten elektrischen Getriebemotormittel (11.2) konfiguriert sind, verbunden sind, und manuelle Hebelsteuerungsmittel (11.31), die In Übereinstimmung mit einem Griff (11.30) des besagten Wagens (11.1) angeordnet und für die operative Kontrolle der besagten Potentiometermittel zumindest während der Startphase der besagten elektrischen Getriebemotormittel (11.2) konfiguriert sind, und
- elektronische Mikrocontroller, die elektrisch in Bezug auf die besagten Stromkreisversorgungs- und Kontrollmittel verbunden und für die funktionelle Kontrolle der besagten elektrischen Getriebemotormittel (11.2) konfiguriert sind.

3. Vorrichtung (10) für den Transport von Gegenständen mittels eines Wagens (11.1) mit unterstützter Schubkraft gemäß Anspruch 2, **dadurch gekennzeichnet, dass** die besagte erste Einheit (11) Sicherheitskontrollmittel umfasst, die Gyroskop-/Beschleunigungsmesser-Mittel und Ultraschallsensor-Mittel (11.6) beinhalten, die In Bezug auf die besagten Stromkrelsversorgungs- und Kontrollmittel verbunden und konfiguriert sind, um Daten bezüglich der Anordnung in Bezug auf den Boden und die Beschleunigung des besagten Wagens (11.1) und auf die Beschaffenheit des Geländes, auf dem der besagte Wagen (11.1) bewegt wird, zu erfassen und um die Unterbrechung der Stromversorgung der besagten elektrischen Getriebemotormittel (11.2) zu bestimmen, wenn die von den besagten Sicherheitskontrollmitteln erfassten Daten nicht mit bestimmten Sicherheitsparametern übereinstimmen, die in elektronischen Speichermitteln, die In Bezug auf die besagten elektronischen Mikroprozessormitteln operativ verbunden sind, vorregistriert wurden.

4. Vorrichtung (10) für den Transport von Gegenständen mittels eines Wagens (11.1) mit unterstützter Schubkraft gemäß einem oder mehreren der vorhergehenden Ansprüche, **dadurch gekennzeichnet, dass** die besagten elektrischen Getriebemotormittel (11.2) zwei voneinander unabhängige Getriebemotoren umfassen, wobei jeder für die operative Kontrolle eines entsprechenden Rades (11.3) des Wagens (11.1) vorgesehen Ist; die besagten elektrischen Batteriemittel (11.4) umfassen mindestens einen Batteriesatz für die besagten zwei Getriebemotoren; die besagten elektrischen Batterieladegerätmittel (12.2) umfassen mindestens eine Ladevorrichtung für den besagten mindestens einen elektrischen Batteriesatz, und die besagten auseinandernehmbaren elektrischen Verbindungsmittel (11.5, 12.3) umfassen elektrische Mittel mit Stecker für Polarität, die so konfiguriert sind, dass sie eine elektrisch auseinandernehmbare elektrische Verbindung zwischen dem besagten mindestens einen elektrischen Batteriesatz und der besagten mindestens einen Batterieladegerätvorrichtung realisieren.

5. Vorrichtung (10) für den Transport von Gegenständen mittels eines Wagens (11.1) mit unterstützter Schubkraft gemäß den Ansprüchen 2, 3, und 4, **dadurch gekennzeichnet, dass** jedes der besagten zwei Räder (11.3) des besagten Wagens (11.1), angetrieben von einem diesbezüglichen elektrischen Getriebemotor der besagten elektrischen Getriebemotormittel (11.2), mithilfe eines diesbezüglichen elektronischen Controllers betätigt wird, und dadurch, dass die elektronischen Controller der besagten zwei Räder (11.3) diesbezügliche modulierte Signale von den besagten elektronischen Mikroprozessormitteln empfangen, wobei die besagten elektronischen Mikroprozessormittel so konfiguriert sind, dass sie die Modulation in einer Weise ausführen, die der Hebelschwingungsposition der besagten manuellen Hebelsteuerungsmittel (11.31) entspricht.

6. Verwendung der Vorrichtung (10) für den Transport von Gegenständen mittels eines Wagens (11.1) mit unterstützter Schubkraft gemäß einem oder mehreren der vorhergehenden Ansprüche, **dadurch gekennzeichnet, dass** die besagte zweite Einheit (12) als feste Einheit in einem Laderaum eines Fahrzeugs für den Transport von Gegenständen angeordnet ist und die besagten elektrischen/elektronischen Batterielademittel (12.2), wenn zum Wiederaufladen der besagten ersten elektrischen Batteriemittel (11.4) erforderlich, elektrisch verbunden sind In Bezug auf elektrische Versorgungsmittel, die in dem besagten Fahrzeug vorhanden sind.

7. Verwendung der Vorrichtung (20) für den Transport von Gegenständen mittels eines Wagens (21.1) mit unterstützter Schubkraft gemäß einem oder mehreren der vorhergehenden Ansprüche von 1 bis 5, **dadurch gekennzeichnet, dass** besagter Wagen (21.1) der besagten ersten Einheit (21) und besagtes Fahrgestell (22.1) der besagten zweiten Einheit (22) auseinandernehmbare mechanische wechselseitige Verbindungsmittel umfassen, die das besagte Fahrgestell (22.1), verbunden in Bezug auf den besagten Wagen (21.1), stabil festhalten, wenn die besagten elektrischen Verbindungsmittel (22.3) der zweiten Einheit (22) elektrisch in Bezug auf die elektrischen Verbindungsmittel der besagten ersten Einheit (21) verbunden sind.

## Revendications

1. Appareil (10, 20) pour le transport d'objets au moyen d'un chariot (11.1, 21.1) à poussée assistée, comprenant :
- une première unité (11, 21), configurée comme chariot (11.1, 21.1) à deux roues (11.3, 21.3) pour le transport d'objets, comprenant des moyens à motoréducteur électrique (11.2, 21.2), configurés pour commander en rotation au moins une desdites deux roues (11.3, 21.3), et des premiers moyens électriques à batterie d'accumulateurs (11.4, 21.4) rechargeables, configurés pour alimenter, par le biais de moyens de circuit électrique d'alimentation et de contrôle correspondants, lesdits moyens à motoréducteur électrique (11.2, 21.2), et
- une seconde unité (12, 22), configurée comme coque (12.1, 22.1), structurellement complémentaire par rapport audit chariot (11.1, 21.1) et comprenant au moins des moyens électriques/électroniques chargeurs de batterie (12.2, 22.2), configurés pour la recharge électrique desdits premiers moyens électriques à batterie (11.4, 21.4) de ladite première unité (11, 21) ;
et où lesdits premiers moyens électriques à batterie (11.4, 21.4) de ladite première unité (11, 21) et lesdits moyens électriques/électroniques chargeurs de batterie (12.2, 22.2) de ladite seconde unité (12, 22) comprennent des moyens électriques respectifs de raccordement électrique démontable (11.5 ; 12.3, 22.3), configurés pour réaliser sélectivement le raccordement électrique réciproque et effectuer la recharge électrique desdits premiers moyens électriques à batterie (11.4, 21.4) par le biais des moyens électriques/électroniques chargeurs de batterie (12.2, 22.2), par le biais des moyens de circuit électriques d'alimentation et de contrôle correspondants de ladite première unité (11, 21) et de ladite seconde unité (12, 22), **caractérisé par le fait que** ladite seconde unité (22) comprend également des seconds moyens électriques à batterie d'accumulateurs (23), rechargeables et raccordés électriquement, par le biais de moyens de circuit électrique correspondant, d'un part, vis-à-vis desdits moyens électriques/électroniques chargeurs de batterie (22.2), pour la recharge électrique, lorsque cela est nécessaire, et d'autre part, vis-à-vis desdits moyens de raccordement électrique démontable (22.3) de ladite seconde unité (12, 22),
et **par le fait que** ladite première unité (21) comprend des moyens de circuit électrique d'alimentation et de contrôle et ladite seconde unité (22) comprend des moyens de circuit électrique d'alimentation et de contrôle configurés, respectivement, pour réaliser, quand lesdits moyens de raccordement électrique démontable (22.3) de la seconde unité (22) sont raccordé électriquement vis-à-vis des moyens de raccordement électrique démontable de la première unité (21), par le biais de moyens de commutation électrique, sélectivement une des deux configurations différentes de raccordement électrique, soit :
- une première configuration de circuit électrique, où lesdits premiers moyens électriques à batterie (21.4) de ladite première unité (21) sont raccordés électriquement vis-à-vis desdits moyens électriques/électroniques chargeurs de batterie (22.2), pour la recharge électrique, et
- une seconde configuration de circuit électrique, où lesdits seconds moyens électriques à batterie d'accumulateurs (23) sont raccordés électriquement auxdits moyens à motoréducteur électrique (21.2) de ladite première unité (21).

2. Appareil (10) pour le transport d'objets au moyen d'un chariot (11.1) à poussée assistée selon la revendication 1, **caractérisé par le fait que** ladite première unité (11) comprend :
- des moyens électriques/électroniques à capteur de position, raccordés vis-à-vis desdits moyens de circuit électrique d'alimentation et de contrôle, configurés pour le contrôle de l'alimentation desdits moyens à motoréducteur électrique (11.2), et des moyens de commande manuelle à levier (11.31), disposés au niveau d'une poignée (11.30) dudit chariot (11.1) et configurés pour le contrôle opérationnel desdits moyens à potentiomètre au moins durant la phase de démarrage desdits moyens à motoréducteur électrique (11.2), et
- des moyens électroniques à microcontrôleur, raccordés électriquement vis-à-vis desdits moyens de circuit électrique d'alimentation et de contrôle et configurés pour le contrôle fonctionnel desdits moyens à motoréducteur électrique (11.2).

3. Appareil (10) pour le transport d'objets au moyen d'un chariot (11.1) à poussée assistée selon la revendication 2, **caractérisé par le fait que** ladite première unité (11) comprend des moyens de contrôle de sécurité, incluant des moyens à gyroscope/accéléromètre et des moyens à capteurs à ultrasons (11.6), raccordés vis-à-vis desdits moyens de circuit électrique d'alimentation et de contrôle et configurés pour détecter des données relatives à la disposition par rapport au sol et à l'accélération dudit chariot (11.1) et à la conformation du sol sur lequel ledit chariot (11.1) est déplacé, et pour déterminer l'interruption de l'alimentation électrique desdits moyens à motoréducteur électrique (11.2), lorsque les données détectées par lesdits moyens de contrôle de sécurité ne sont pas conformes à certains paramètres de sécurité pré-enregistrés dans des moyens électroniques de mémoire raccordés opérationnellement vis-à-vis desdits moyens électroniques à microprocesseur.

4. Appareil (10) pour le transport d'objets au moyen d'un chariot (11.1) à poussée assistée selon une ou plusieurs des revendications précédentes, **caractérisé par le fait que** lesdits moyens à motoréducteur électrique (11.2) comprennent deux motoréducteurs indépendants entre eux, chacun étant prévu pour le contrôle opérationnel d'une roue correspondante (11.3) du chariot (11.1) ; lesdits moyens électriques à batterie (11.4) comprennent au moins un bloc de batteries électriques pour lesdits deux motoréducteurs ; lesdits moyens électriques chargeurs de batterie (12.2) comprennent au moins un dispositif chargeur de batterie pour ledit bloc de batteries électrique au minimum, et lesdits moyens électriques de raccordement électrique démontable (11.5, 12.3) comprennent des moyens électriques à connecteur pour polarité, configurés pour réaliser un raccordement électrique démontable entre ledit bloc de batteries électriques au minimum et ledit dispositif chargeur de batterie au minimum.

5. Appareil (10) pour le transport d'objets au moyen d'un chariot (11.1) à poussée assistée selon les revendications 2, 3 et 4, **caractérisé par le fait que** chacune desdites deux roues (11.3) dudit chariot (11.1), actionnée par un motoréducteur respectif desdits moyens à motoréducteur électrique (11.2), est actionnée par l'intermédiaire d'un contrôleur électronique respectif, et **par le fait que** les contrôleurs électroniques desdites deux roues (11.3) reçoivent des signaux modulés respectifs desdits moyens électroniques à microprocesseur, où lesdits moyens électroniques à microprocesseur sont configurés pour effectuer la modulation de façon correspondante à la position d'oscillation du levier desdits moyens de commande manuelle à levier (11.31).

6. Utilisation de l'appareil (10) pour le transport d'objets au moyen d'un chariot (11.1) à poussée assistée selon une ou plusieurs des revendications précédentes, **caractérisé par le fait que** ladite seconde unité (12) est disposée comme unité fixe à l'Intérieur d'un compartiment de chargement d'un véhicule pour le transport d'objets, et lesdits moyens électriques/électroniques chargeurs de batterie (12.2) sont raccordés électriquement, si nécessaire pour la recharge desdits premiers moyens électriques-à battone (1-1.4), vis à vis des présents dans ledit véhicule.

7. Utilisation de l'appareil (20) pour le transport d'objets au moyen d'un chariot (21.1) à poussée assistée selon une ou plusieurs des revendications de 1 à 5, **caractérisé par le fait que** ledit chariot (21.1) de ladite première unité (21) et ladite coque (22.1) de ladite seconde unité (22) comprennent des moyens de raccordement réciproque mécanique démontable, lesquels retiennent de manière stable ladite coque (22.1) raccordée vis-à-vis dudit chariot (21.1), quand lesdits moyens de raccordement électrique (22.3) de la seconde unité (22) sont raccordés électriquement auxdits moyens de raccordement électrique de ladite première unité (21).
